# EUROPÄISCHE PATENTSCHRIFT

(11) **EP 2 307 670 B1**
(45) Veröffentlichungstag und Bekanntmachung des Hinweises auf die Patenterteilung: **14.06.2017**
(21) Anmeldenummer: 10710170.1
(22) Anmeldetag: 01.02.2010
(51) Int. Cl.: F01D 5/08, F01D 5/34

(54) **INTEGRAL BESCHAUFELTE ROTORSCHEIBE FÜR EINE TURBINE**
INTEGRALLY BLADED ROTOR DISK FOR A TURBINE
DISQUE DE ROTOR À AUBES SOLIDAIRES POUR TURBINE

(30) Priorität: 04.02.2009 DE 102009007468
(43) Veröffentlichungstag der Anmeldung: 13.04.2011
(73) Patentinhaber: MTU Aero Engines AG, 80995 München (DE)
(72) Erfinder: BORUFKA, Hans-Peter, 82319 Starnberg (DE); STIEHLER, Frank, 04924 Bad Liebenwerda (DE); ARRIETA, Hernan, Victor, 35-302 Rzeszow (PL); PROKOPCZUK, Patrick, 80686 München (DE); LORENZ, Joachim, 85250 Altomünster (DE)
(86) Internationale Anmeldenummer: PCT/DE2010/000107
(87) Internationale Veröffentlichungsnummer: WO 2010/088882

(56) Entgegenhaltungen:
- EP-A1- 0 144 842
- EP-A1- 1 950 381
- GB-A- 947 553
- GB-A- 2 251 897
- US-A- 4 813 848
- US-A1- 2005 232 780

## Beschreibung

Die vorliegende Erfindung bezieht sich auf eine integral beschaufelte Rotorscheibe (engl.: Blisk = Bladed Disk) für eine Turbine, insbesondere für einen Hochdruckteil einer Turbine, sowie auf eine Turbine.

Ein Beispiel einer integral beschaufelten Rotorscheibe ist in der GB 2 251 897 A offenbart.

Aus thermodynamischen Gründen steigt der Wirkungsgrad einer Brennkraftmaschine mit der Verbrennungstemperatur. Deshalb werden bei Gasturbinen, die in zahlreichen Varianten in Luftfahrzeugen, aber auch in anderen Fahrzeugen und bei stationären Anwendungen eingesetzt werden, in der oder den Brennkammern immer höhere Temperaturen angestrebt. Im Hochdruckteil der Turbine, der sich an die Brennkammer(n) stromabwärts unmittelbar anschließt, sind alle offenen Oberflächen von Leit- und Laufschaufeln und anderen offen liegenden Bauteilen diesen hohen Temperaturen ausgesetzt. Um eine Turbine bei einer möglichst hohen Temperatur betreiben zu können, werden die dem heißen Gasstrom ausgesetzten Bauteile, insbesondere die Schaufeln, mittels innen liegender Kühlkanäle und mittels einer Filmkühlung gekühlt.

Integral beschaufelte Rotorscheiben wurden für Verdichter entwickelt, die der Brennkammer vorgeschaltet und deshalb den hohen Verbrennungstemperaturen nicht ausgesetzt sind. Da die Herstellung einer integral beschaufelten Rotorscheibe aus einem Stück eine Reihe von Nachteilen hat, werden in der Regel die Laufschaufeln einzeln hergestellt und dann mit einem Scheibenelement durch Reibschweißen oder auf andere Weise stoffschlüssig verbunden. Die US 2005/0232780 A1 beschreibt eine integral beschaufelte Rotorscheibe für eine Turbine, bei der Eingänge innerer Kühlkanäle jeweils am Schaft einer Schaufel angeordnet sind. Jeweils zwischen Schaft und Blatt angeordnete Plattformen können in umfänglicher Richtung miteinander verschweißt sein. Alternativ sind Dichtstreifen zwischen einander gegenüberliegenden Plattformkanten angeordnet.

Ein Nachteil der in der US 2005/0232780 A1 beschriebenen Rotorscheibe besteht darin, dass zwischen den Schäften der Laufschaufeln hindurch Kühlluft von der Hochdruckseite zur Niederdruckseite der Rotorscheibe strömen kann. Die in umfänglicher Richtung gemessenen Abstände der Schäfte weisen bei bestimmten Fertigungsverfahren aus fertigungstechnischen Gründen Mindestbreiten auf, die nicht oder nicht ohne weiteres unterschritten werden können. Da Leistung erforderlich ist, um Kühlluft im Verdichter zu komprimieren, die dann der Turbine zugeführt wird, wirkt sich jeder unerwünschte Abfluss von Kühlluft negativ auf den Wirkungsgrad aus und ist deshalb möglichst zu vermeiden.

Eine Aufgabe der vorliegenden Erfindung besteht darin, eine verbesserte integral beschaufelte Rotorscheibe sowie eine Turbine mit einer integral beschaufelten Rotorscheibe zu schaffen.

Diese Aufgabe wird durch eine integral beschaufelte Rotorscheibe und eine Turbine gemäß den unabhängigen Ansprüchen gelöst. Weiterbildungen sind in den abhängigen Ansprüchen definiert.

Die vorliegende Erfindung beruht auf der Idee, an einer integral beschaufelten Rotorscheibe für eine Turbine eine Dichteinrichtung zur Unterbindung oder Reduzierung eines Übertritts von Kühlluft von einer Hochdruckseite der Rotorscheibe durch Öffnungen hindurch zu einer Niederdruckseite zu schaffen. Diese Dichteinrichtung kann insbesondere kranzförmig angeordnete Öffnungen zwischen Schäften jeweils benachbarter Laufschaufeln teilweise oder vollständig verschließen. Damit ist auch im Fall von Schäften, die eine große in radialer Richtung gemessene Länge und/oder einen großen in umfänglicher Richtung gemessenen Abstand aufweisen, eine Unterbindung oder Reduzierung eines Übertritts von Kühlluft von der Hochdruckseite zur Niederdruckseite der Rotorscheibe möglich.

Die vorliegende Erfindung schafft zusätzliche konstruktive Freiheitsgrade, die eine weitere Optimierung der integral beschaufelten Rotorscheibe und ihrer Herstellung ermöglicht. Beispielsweise können nunmehr die Schäfte schmaler ausgeführt werden, wodurch ein Zufluss von Kühlluft zu an den Seiten der Schäfte angebrachten Eingängen von inneren Kühlkanälen verbessert wird.

Die Dichteinrichtung umfasst ein ein- oder mehrstückiges annulares bzw. ringförmiges Bauteil. Wenn dieses die Öffnungen an der Niederdruckseite der Rotorscheibe verschließt, kann Kühlluft von der Hochdruckseite ungehindert in Eingänge von Kühlkanälen in den Laufschaufeln, nicht jedoch auf die Niederdruckseite der Rotorscheibe fließen. Bei einer Anordnung der Dichteinrichtung an der Hochdruckseite der Rotorscheibe kann eine Anordnung von Öffnungen in der Dichteinrichtung vorteilhaft sein, durch die Kühlluft zu den Schäften der Laufschaufeln und gegebenenfalls zu Eingängen innerer Kühlkanäle an den Schäften gelangen kann.

Das ringförmige Bauteil besteht beispielsweise aus einem oder mehreren miteinander durch Stoffschluss, Formschluss oder auf andere Weise verbundenen Blechteilen. Das ringförmige Bauteil ist in Halteelemente an der Rotorscheibe eingehakt oder wird durch Halteeinrichtungen gehalten. Die Halteeinrichtungen können einerseits in die Öffnungen eingreifen und andererseits das ringförmige Bauteil halten. Als solche Halteeinrichtungen sind beispielsweise Rohre oder Blechprofilbauteile geeignet, die in den Öffnungen angeordnet sind und mittels Kragen oder gebördelter Ränder an ihren beiden Enden das ringförmige Bauteil durch Formschluss an der Rotorscheibe halten.

Zur Einstellung des zur Kühlung der Rotorscheibe erforderlichen Massenstroms können Öffnungen in der Dichteinrichtung vorgesehen sein, deren hydraulische Querschnittsflächen den kühlenden Massenstrom bestimmen. Wie bereits erwähnt kann vor allem bei einer Anordnung der Dichteinrichtung an der Niederdruckseite der Rotorscheibe Kühlluft von der Hochdruckseite aus in Eingänge von inneren Kühlkanälen, die in den Schäften der Laufschaufeln angeordnet sind, eintreten. Die Eingänge der Kühlkanäle können an den der Hochdruckseite zugewandten Flächen der Schäfte und/oder an den den jeweils benachbarten Schäften zugeordneten Seitenflächen der Schäfte und/oder an den der Niederdruckseite zugewandten Flächen der Schäfte angeordnet sein. Eine Zuführung von Kühlluft zu den Kühlkanälen über eine Coverplate, eine Finger-Coverplate oder eine Vordralldüse ist besonders vorteilhaft, wenn die Eingänge der Kühlkanäle einer solchen Einrichtung gegenüberliegen, also insbesondere an den der Hochdruckseite zugewandten Seiten der Schäfte angeordnet sind.

Die vorliegende Offenbarung umfasst ferner die Idee, eine Finger-Coverplate zum Führen von Kühlluft zu den Laufschaufeln einer integral beschaufelten Rotorscheibe vorzusehen. Die Finger-Coverplate weist an ihrem äußeren Umfang fingerähnliche radiale Erweiterungen und radiale Einschnitte zwischen den fingerähnlichen radialen Erweiterungen auf. Dadurch ist der Abstand des äußeren Rands der Finger-Coverplate vom Mittelpunkt der Finger-Coverplate an den fingerförmigen radialen Erweiterungen größer als an den radialen Einschnitten.

Bei der integral beschaufelten Rotorscheibe für die Turbine können Eingänge zu Kühlkanälen an Seiten der Laufschaufeln oder deren Schäfte angeordnet werden, wobei die Eingänge einer Hochdruckseite der Rotorscheibe und/oder einer Niederdruckseite der Rotorscheibe zugewandet sein können.

Die vorliegende Offenbarung umfasst ferner die Idee, bei nicht miteinander verschweißten Plattformen Dichteinrichtungen zwischen den Schäften der Laufschaufeln und angrenzend an die Plattformen, insbesondere radial von innen an die Plattformen angrenzend, anzuordnen. Mit diesen Dichteinrichtungen kann ein Gasstrom in radialer Richtung zwischen den Plattformen benachbarter Laufschaufeln hindurch verhindert oder vermindert werden. Insbesondere kann sowohl ein Übertritt von Kühlluft von den Öffnungen bzw. Zwischenräumen zwischen den Schäften der Laufschaufeln in radialer Richtung nach außen zu den Blättern als auch ein Eintritt von heißen Gasen in radialer Richtung nach innen verhindert oder vermindert werden. Aufgrund ihrer Anordnung zwischen den Schäften und angrenzend an die Plattformen können die Dichteinrichtungen mit geringern Aufwand nach der Verbindung der Laufschaufeln mit dem zentralen Scheibenelement eingesetzt werden. Die Dichtwirkung kann durch die im Betrieb der Turbine wirkenden Fliehkräfte verstärkt werden, die die Dichteinrichtungen gegen die Plattformen drücken.

Die oben beschriebene Dichteinrichtung zur Abdichtung der Öffnungen zwischen den Schäften der Laufschaufeln gegen einen Massenstrom in axialer Richtung und die zuletzt beschriebenen Dichteinrichtungen gegen einen Massenstrom in radialer Richtung können vorteilhaft kombiniert werden. Damit ist eine weitgehend vollständige Kontrolle der Kühlluftströme möglich, die sonst nur bei einer innerhalb der Plattform bzw. Plattformen vollständig geschlossenen Rotorscheibe möglich wäre. Zu diesem Zweck können zur Abdichtung in radialer Richtung auch andere Dichteinrichtungen eingesetzt werden.

Insgesamt ermöglicht die vorliegende Erfindung in verschiedenen Ausprägungen und Ausführungsformen eine verbesserte Steuerung des Kühlluftstroms und geringere Verluste an Kühlluft. Damit können ein reduzierter Kühlluftbedarf und/oder eine verbesserte Kühlung der Rotorscheibe einschließlich des zentralen Scheibenelements und der Laufschaufeln verwirklicht werden. Die vorliegende Erfindung eignet sich für Turbinen, insbesondere für extremen Temperaturen ausgesetzte Hochdruckturbinen oder Hochdruckteile von Turbinen, in Strahl-, Mantelstrom-, Turboprop-, Wellenleistungs- und anderen Triebwerken von Luftfahrzeugen oder anderen Fahrzeugen sowie in stationären Anwendungen.

Nachfolgend werden Ausführungsbeispiele mit Bezug auf die beiliegenden Figuren näher erläutert. Es zeigen
- Figur 1: eine schematische Darstellung einer integral beschaufelten Rotorscheibe;
- Figur 2: eine weitere schematische Darstellung der integral beschaufelten Rotorscheibe aus Figur 1;
- Figur 3: eine schematische Darstellung einer weiteren integral beschaufelten Rotorscheibe;
- Figur 4: eine schematische Darstellung einer weiteren integral beschaufelten Rotorscheibe;
- Figur 5: eine schematische Darstellung einer weiteren integral beschaufelten Rotorscheibe;
- Figur 6: eine schematische Darstellung einer weiteren integral beschaufelten Rotorscheibe;
- Figur 7: eine schematische Darstellung einer weiteren integral beschaufelten Rotorscheibe;
- Figur 8: eine schematische Darstellung einer weiteren integral beschaufelten Rotorscheibe;
- Figur 9: eine schematische Darstellung einer weiteren integral beschaufelten Rotorscheibe;
- Figur 10: eine schematische Darstellung einer Finger-Coverplate; und
- Figur 11: eine schematische Darstellung einer weiteren integral beschaufelten Rotorscheibe.

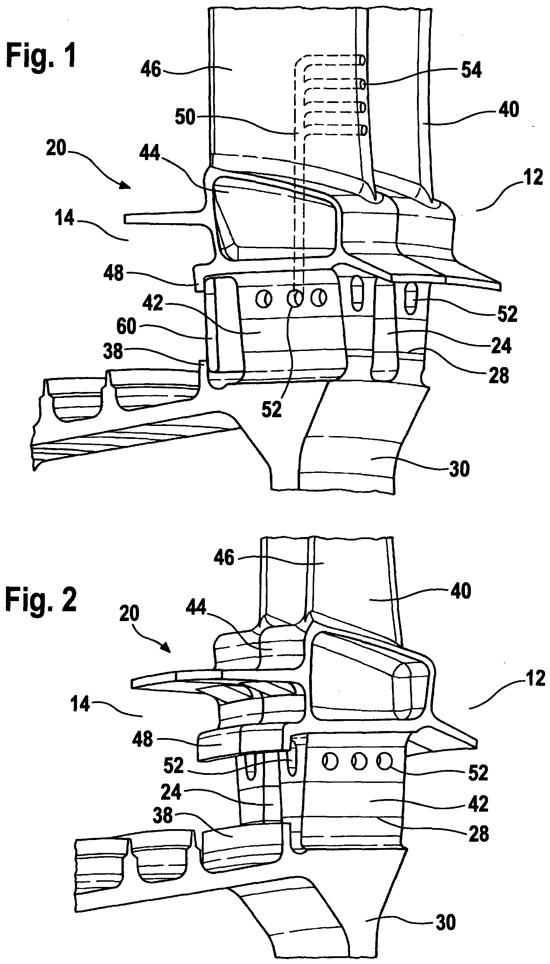

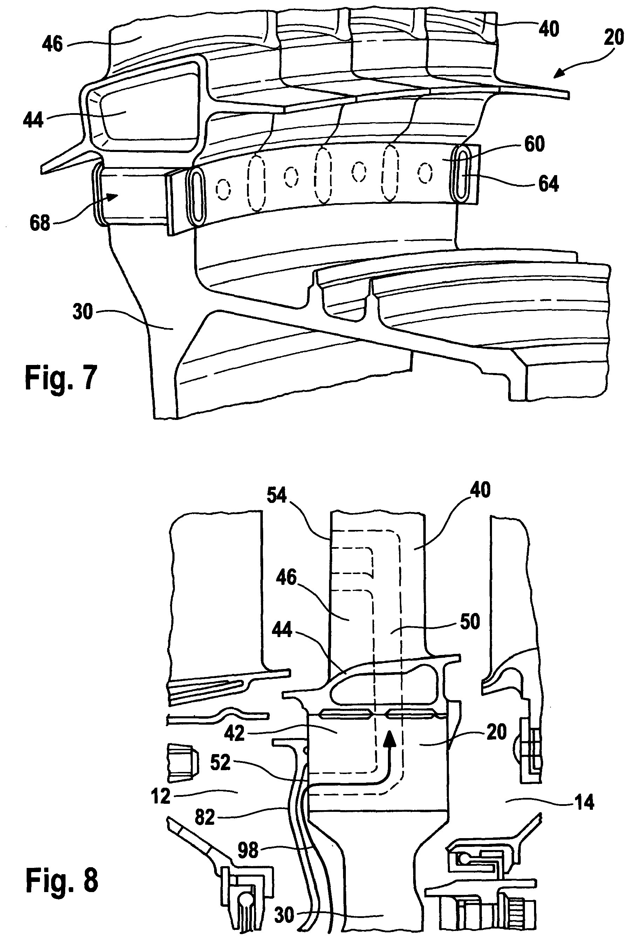

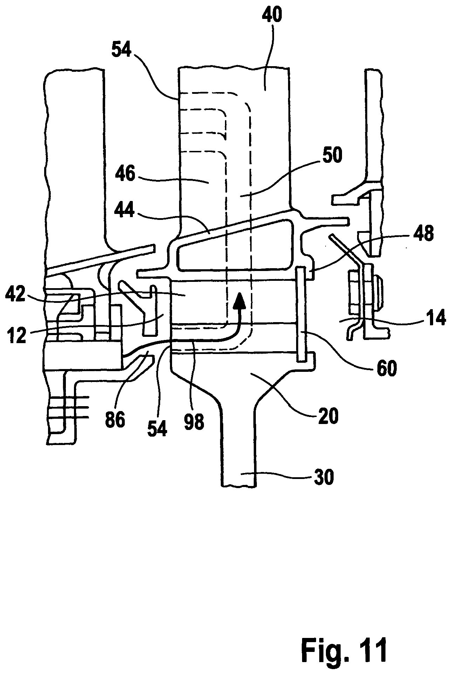

Die nachfolgend beschriebenen Figuren zeigen schematische Darstellungen verschiedener Ausführungsformen von integral beschaufelten Rotorscheiben. Es ist jeweils nur ein Ausschnitt der gesamten Rotorscheibe dargestellt, nämlich ein radial außen liegender Bereich eines Ausschnitts eines Scheibenelements, mit dessen äußerem Umfang Schäfte von Laufschaufeln eines Laufschaufelkranzes stoffschlüssig verbunden sind. Auch die Laufschaufeln, insbesondere deren Blätter, sind nur teilweise dargestellt. In einigen Figuren sind Trommeln dargestellt, die sich an die eigentlichen Rotorscheiben anschließen und mit diesen einstückig ausgebildet sein können, auf die aber nachfolgend nicht näher eingegangen wird. Die Figuren 1 bis 7 und 9 zeigen perspektivische Darstellungen, die Figuren 8 und 11 zeigen Schnitte entlang einer Ebene, die die Achse der Rotorscheibe enthält.

Die Figur 1 zeigt eine integral beschaufelte Rotorscheibe 20 mit einem Scheibenelement 30, das in einem außenliegenden Bereich mit Laufschaufeln 40 stoffschlüssig verbunden ist. Jede Laufschaufel weist einen Schaft 42, eine Plattform 44 und ein Blatt 46 auf. Die radial innen liegenden Enden der Schäfte 42 sind jeweils mit dem äußeren Umfang des Scheibenelements 30 an einer Fügestelle 28 stoffschlüssig verbunden, beispielsweise durch Reibschweißen. Die Plattformen 44 der Laufschaufeln 40 weisen in umfänglicher Richtung einen geringen gegenseitigen Abstand auf, grenzen aneinander an oder sind miteinander verschweißt oder auf andere Weise verbunden. Die in umfänglicher Richtung gemessene Breite eines Schafts 42 ist geringer oder deutlich geringer als die Breite einer Plattform 44. Zwischen den Schäften 42 verbleiben deshalb Zwischenräume bzw. Öffnungen 24, die von nachfolgend beschriebenen Maßnahmen abgesehen in axialer Richtung eine Hochdruckseite 12 mit einer Niederdruckseite 14 der integral beschaufelten Rotorscheibe 20 verbinden.

In jeder Laufschaufel 40 ist einer oder sind mehrere Kühlkanäle 50 angeordnet, die von Eingängen 52 im Schaft 42 der Laufschaufel zu Ausgängen 54 im Blatt 46 der Laufschaufel 40 führen. Die Eingänge 52 sind jeweils an einer der Hochdruckseite 12 zugewandten Seite des Schafts 42 und/oder an einer der Niederdruckseite 14 zugewandten Seite des Schafts 42 und/oder an einer oder beiden den jeweils benachbarten Laufschaufeln zugewandten Seiten des Schafts 42 angeordnet. Die Ausgänge 54 sind in dem dargestellten Beispiel an einem der Hochdruckseite 12 der Rotorscheibe 20 zugewandten Rand des Blatts 46 angeordnet. Alternativ oder zusätzlich können Ausgänge 54 an den den benachbarten Laufschaufeln 40 zugewandten Flächen des Blatts 46 angeordnet sein.

Ein bei diesem Beispiel ringförmiges Bauteil 60 ist an der Niederdruckseite 14 vor den Öffnungen 24 angeordnet. Das ringförmige Bauteil 60 wird durch Haken oder Stege 38, 48 am Scheibenelement 30 und an den Laufschaufeln 40 gehalten. Die Haken 48 an den Laufschaufeln 40 sind auf der Niederdruckseite 14 in einem in radialer Richtung innen liegenden Bereich der Plattformen 44 angeordnet. Das ringförmige Bauteil 60 ist eine Dichteinrichtung, die zusammen mit den Haken 38, 48 an dem Scheibenelement 30 und an den Laufschaufeln 40 einen Übertritt von Kühlluft von der Hochdruckseite 12 durch die Öffnungen 24 hindurch zur Niederdruckseite 14 unterbindet oder reduziert. Das ringförmige Bauteil 60 besteht beispielsweise aus einem einstückigen ringförmigen Blechstreifen. Alternativ ist das ringförmige Bauteil 60 aus mehreren Blechteilen oder anderen Teilen zusammengesetzt, die stoffschlüssig, formschlüssig, kraftschlüssig oder auf andere Weise miteinander verbunden sind.

Figur 2 zeigt eine schematische Darstellung der oben anhand der Figur 1 dargestellten integral beschaufelten Rotorscheibe 20 aus einer anderen Perspektive. Das ringförmige Bauteil 60 ist in Figur 2 nicht dargestellt, um eine Darstellung der der Niederdruckseite 14 zugewandten Seiten der Schäfte 42 und der dort angeordneten Eingänge 52 zu ermöglichen. Abweichend von den Darstellungen in den Figuren 1 und 2 können Öffnungen 52 zu Kühlkanälen 50 alternativ in weniger als allen Seiten der Schäfte 42 angeordnet sein, beispielsweise nur an der der Hochdruckseite 12 zugewandeten Seite und/oder an der der Niederdruckseite 14 zugewandten Seite.

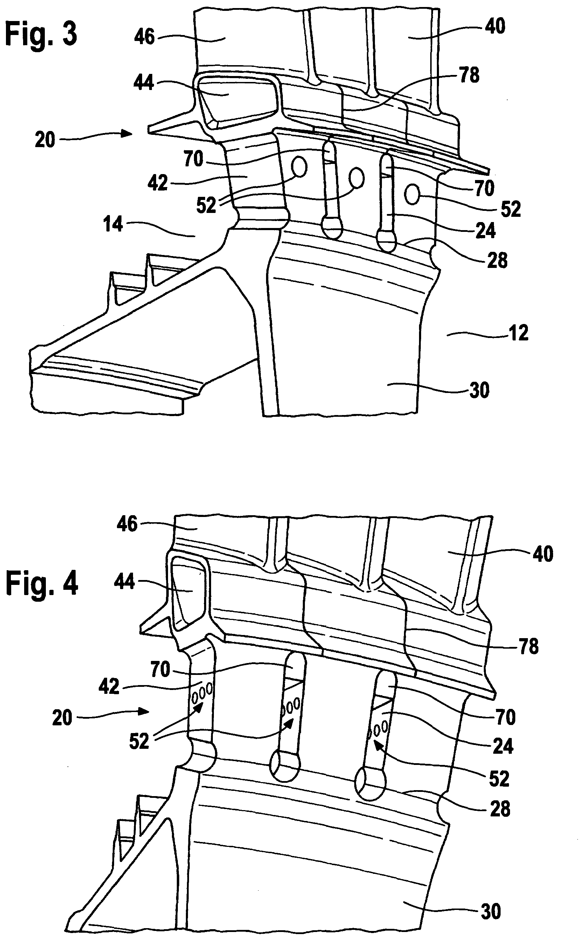

Figur 3 zeigt eine schematische Darstellung einer integral beschaufelten Rotorscheibe 20, die sich von der oben anhand der Figuren 1 und 2 dargestellten in mehreren Punkten unterscheidet. Insbesondere weist der Schaft 42 jeder Laufschaufel 40 nur einen Eingang 52 zu einem in Figur 3 nicht dargestellten inneren Kühlkanal auf. Dieser Eingang 52 ist jeweils an der der Hochdruckseite 12 zugewandten Seite des Schafts 42 angeordnet. Zusätzlich kann ein weiter Eingang an der der Niederdruckseite 14 zugewandten Seite des Schafts 42 angeordnet sein.

Ferner unterscheidet sich die in Figur 3 dargestellte integral beschaufelte Rotorscheibe 20 von der oben anhand der Figuren 1 und 2 dargestellten dadurch, dass in den Zwischenräumen bzw. öffnungen 24 zwischen den Schäften 42 der Laufschaufeln 40 Dichteinrichtungen 70 angeordnet sind. Die Dichteinrichtungen 70 sind in unmittelbarer Nähe der Plattformen 44 angeordnet oder grenzen an diese von radial innen an. Die Dichteinrichtungen 70 dichten durch Anlage an den Schäften 42 und/oder an den Plattformen 44 die Zwischenräume bzw. Öffnungen 24 zwischen den Schäften 42 gegen einen Gasaustausch in radialer Richtung ab. Ohne die Dichteinrichtungen 70 könnte Kühlluft aus den Öffnungen 24 in radialer Richtung nach außen zwischen den Plattformen 44 hindurch entweichen. Abhängig von den Druckverhältnissen könnten auch heiße Gase in radialer Richtung nach innen zwischen den Plattformen 44 hindurch in die Öffnungen 24 eintreten. Die von den Dichteinrichtungen 70 abgedichteten radial nach außen führenden Spalte zwischen den Plattformen 44 sind in Figur 3 durch radiale Linien 78 angedeutet.

Ein bei diesem Beispiel ringförmiges Bauteil zur Abdichtung der Öffnungen 24 gegen einen Gasaustausch in axialer Richtung zwischen der Hochdruckseite 12 und der Niederdruckseite 14 oder eine andere Dichteinrichtung entsprechender Funktion ist in Figur 3 nicht dargestellt, kann jedoch vorteilhaft mit den Dichteinrichtungen 70 kombiniert werden.

Figur 4 zeigt eine schematische Darstellung einer weiteren integral beschaufelten Rotorscheibe 20, die sich von der oben anhand der Figur 3 dargestellten dadurch unterscheidet, dass an den der Niederdruckseite 14 zugewandten Seiten der Schäfte 42 keine Eingänge für innere Kühlkanäle der Laufschaufeln 40 vorgesehen sind. Stattdessen weist der Schaft 42 jeder Laufschaufel 40 an zumindest einer einem Schaft 42 einer benachbarten Laufschaufel 40 zugewandten Seite eine oder mehrere Eingänge 52 zu in Figur 4 wiederum nicht dargestellten inneren Kühlkanälen auf. Die in Figur 4 dargestellten Dichteinrichtungen 70 entsprechen den oben anhand der Figur 3 dargestellten.

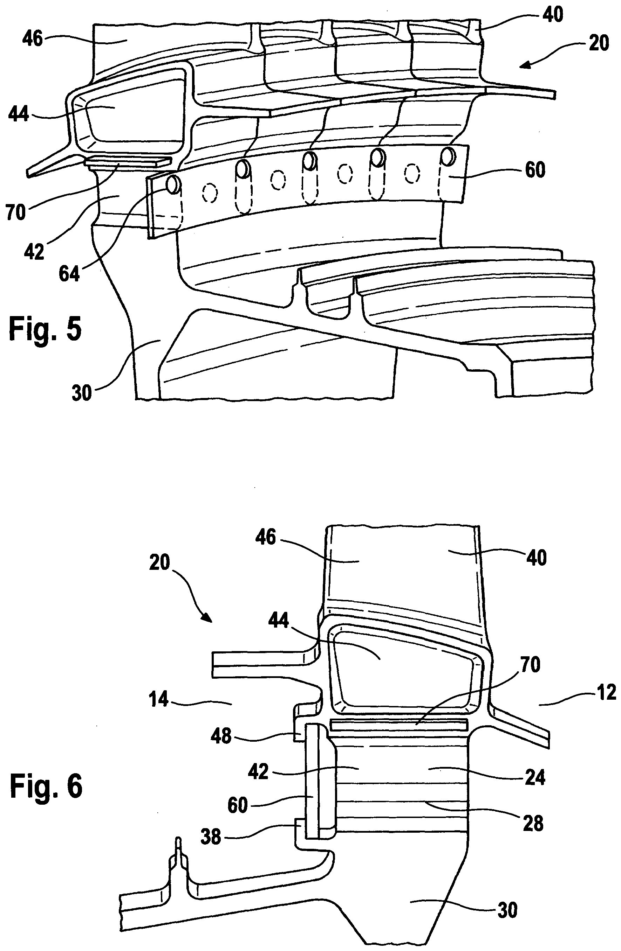

Figur 5 zeigt eine schematische Darstellung einer integral beschaufelten Rotorscheibe 20. Diese weist ähnlich wie die oben anhand der Figuren 1 bis 4 dargestellten integral beschaufelten Rotorscheiben ein Scheibenelement 30 auf, mit dessen äußerem Bereich die radial inneren Enden von Schäften 42 von Laufschaufeln 40 stoffschlüssig verbunden sind. Zwischen den Schäften 42 und Blättern 46 angeordnete Plattformen der Laufschaufeln 40 grenzen in umfänglicher Richtung aneinander an oder weisen nur einen geringen Abstand auf. Die in umfänglicher Richtung gemessene Breite eines Schafts 42 ist kleiner oder deutlich kleiner als die Breite einer Plattform 44, so dass zwischen den Schäften 42 Öffnungen verbleiben, welche die Hochdruckseite mit der Niederdruckseite der integral beschaufelten Rotorscheibe 20 verbinden. Ein bei diesem Beispiel ringförmiges Bauteil 60 verschließt diese Öffnungen weitgehend. Das ringförmige Bauteil 60 weist selbst Öffnungen 64 mit einem deutlich geringeren Querschnitt auf. Im Gegensatz zu der oben anhand der Figuren 1 und 2 dargestellten integral beschaufelten Rotorscheibe verhindert das ringförmige Bauteil 60 als Dichteinrichtung einen Massenstrom von der Hochdruckseite durch die Öffnungen zwischen den Schäften 42 zur Niederdruckseite nicht vollständig, sondern schränkt ihn nur auf ein Maß ein, das durch die Öffnungen 64 bestimmt ist.

Zwischen den Plattformen 44 sind Dichteinrichtungen 70 angeordnet. Jede Dichteinrichtung 70 weist beispielsweise eine länglich rechteckige Form auf und ist in je einem taschenförmigen Schlitz in den beiden angrenzenden Plattformen 44 gehalten und geführt. Ähnlich wie die oben anhand der Figuren 3 und 4 dargestellten Dichteinrichtungen verhindern oder vermindern die Dichteinrichtungen 70 einen Gasaustausch in radialer Richtung zwischen den Plattformen 44 hindurch.

Die Befestigung des ringförmigen Bauteils 60 ist in Figur 5 nicht dargestellt. Das ringförmige Bauteil 60 kann, beispielsweise wie oben anhand der Figuren 1 und 2 dargestellt, in das Scheibenelement 30 und die Laufschaufeln 40 eingehakt oder auf andere Weise befestigt sein. Das ringförmige Bauteil 60 kann aber auch an die integral beschaufelte Rotorscheibe 20 gefügt oder auf andere Weise mit dieser verbunden sein. Dabei kann das ringförmige Bauteil 60 einstückig hergestellt oder mehrere mit einander durch Stoffschluss, Formschluss oder auf andere Weise verbundene zunächst einzeln hergestellte oder erzeugte Teile umfassen.

Anstelle der Dichteinrichtungen 70 zwischen den Plattformen 44 der Laufschaufeln 40 können Dichteinrichtungen vorgesehen sein, wie sie oben anhand der Figuren 3 und 4 beschrieben wurden. Ähnlich wie oben anhand der Figuren 1 bis 4 dargestellt können auch die Laufschaufeln 40 der in Figur 5 dargestellten integral beschaufelten Rotorscheibe 20 Kühlkanäle aufweisen.

Figur 6 zeigt eine schematische Darstellung einer integral beschaufelten Rotorscheibe 20. Ähnlich wie bei den oben anhand der Figuren 1 bis 5 dargestellten Rotorscheiben sind radial innere Enden von Schäften von Laufschaufeln 40 mit einem äußeren Umfang eines Scheibenelements 30 stoffschlüssig verbunden. Zwischen den Schäften 42 und Blättern 46 der Laufschaufeln 40 sind Plattformen 44 angeordnet. In umfänglicher Richtung zwischen den Plattformen 44 angeordnete Spalte oder Lücken sind durch Dichteinrichtungen 70 ähnlich wie oben anhand der Figur 5 dargestellt gegen einen Gasaustausch in radialer Richtung weitgehend abgedichtet.

Zwischen den Schäften 42 liegen Öffnungen 24, die eine Hochdruckseite 12 mit einer Niederdruckseite 14 der integral beschaufelten Rotorscheibe 20 verbinden. Ein bei diesem Beispiel ringförmiges Bauteil 60 wird mit Haken 38, 48 an dem Scheibenelement 30 und an den Laufschaufeln 40 gehalten. Das ringförmige Bauteil 60 ist eine Dichteinrichtung, die das Strömen von Kühlluft in axialer Richtung von der Hochdruckseite 12 durch die Öffnungen 24 hindurch zur Niederdruckseite 14 verhindert oder vermindert.

Figur 7 zeigt eine schematische Darstellung einer integral beschaufelten Rotorscheibe 20. Ähnlich wie bei den oben anhand der Figuren 1 bis 6 dargestellten integral beschaufelten Rotorscheiben ist ein äußerer Bereich eines Scheibenelements 30 stoffschlüssig mit radial inneren Enden von in Figur 7 lediglich angedeuteten Schäften von Laufschaufeln 40 verbunden. Zwischen diesen Schäften sind in Figur 7 ebenfalls nur angedeutete Öffnungen angeordnet. Diese Öffnungen, die die Hochdruckseite mit der Niederdruckseite der integral beschaufelten Rotorscheibe 20 verbinden, sind durch ein bei diesem Beispiel ringförmiges Bauteil 60 weitgehend verschlossen.

In einem Teil der Öffnungen zwischen den Schäften sind Rohre 68 als Halteeinrichtungen für das ringförmige Bauteil 60 angeordnet. Ein solches Rohr 68 weist auf der Hochdruckseite einen Kragen auf, der als mechanischer Anschlag wirkt und eine Bewegung des Rohres 68 durch die Öffnung zur Niederdruckseite der Rotorscheibe 20 verhindert. An der Niederdruckseite ragt jedes Rohr durch eine entsprechende Öffnung in dem ringförmigen Bauteil 60 hindurch. Ein nach außen umgebördelter Rand des Rohres 68 hält das ringförmige Bauteil 60 am Rohr 68 und damit an der integral beschaufelten Rotorscheibe 20.

Das Lumen jedes Rohres 68 bildet eine Öffnung 64, welche die Hochdruckseite mit der Niederdruckseite der integral beschaufelten Rotorscheibe 20 verbindet. Alternativ sind die Lumina der Rohre 68 verschlossen.

Das ringförmige Bauteil 60 ist ähnlich wie bei den oben anhand der Figuren 1, 2, 5 und 6 dargestellten integral beschaufelten Rotorscheiben einstückig hergestellt, beispielsweise ein Blechring, oder aus mehreren Teilen, beispielsweise Blechteilen, stoffschlüssig, formschlüssig oder auf andere Weise zusammengesetzt. Beispielsweise besteht das ringförmige Bauteil 60 aus einzelnen nicht direkt miteinander verbundenen kreisbogenförmigen Segmenten, deren beide umfängliche Enden durch je ein Rohr 68 gehalten werden.

Anstelle der Rohre 68 können Profilbauteile oder andere Halteeinrichtungen in die Öffnungen zwischen den Schäften der Laufschaufeln 40 eingreifen und das ringförmige Bauteil 60 halten.

Die Figuren 8, 9 und 11 zeigen in jeweils schematischer Weise, wie den oben anhand der Figuren 1 bis 7 dargestellten integral beschaufelten Rotorscheiben Kühlluft zugeführt werden kann. Ein Kühlluftstrom ist dabei jeweils durch einen Pfeil 98 dargestellt.

Figur 8 zeigt eine Zufuhr von Kühlluft mittels einer Coverplate 82, die an der Hochdruckseite 12 der integral beschaufelten Rotorscheibe 20 angeordnet ist. Zwischen dem Scheibenelement 30 und den Schäften 42 der Laufschaufeln 40 einerseits sowie der Coverplate 82 andererseits ist ein Hohlraum angeordnet, durch den Kühlluft zugeführt wird, die in die Kühlkanäle 50 der Laufschaufeln 40 strömt und gegebenenfalls auch in geringem Maße zwischen den Schäften 42 hindurch zur Niederdruckseite 14 strömen kann.

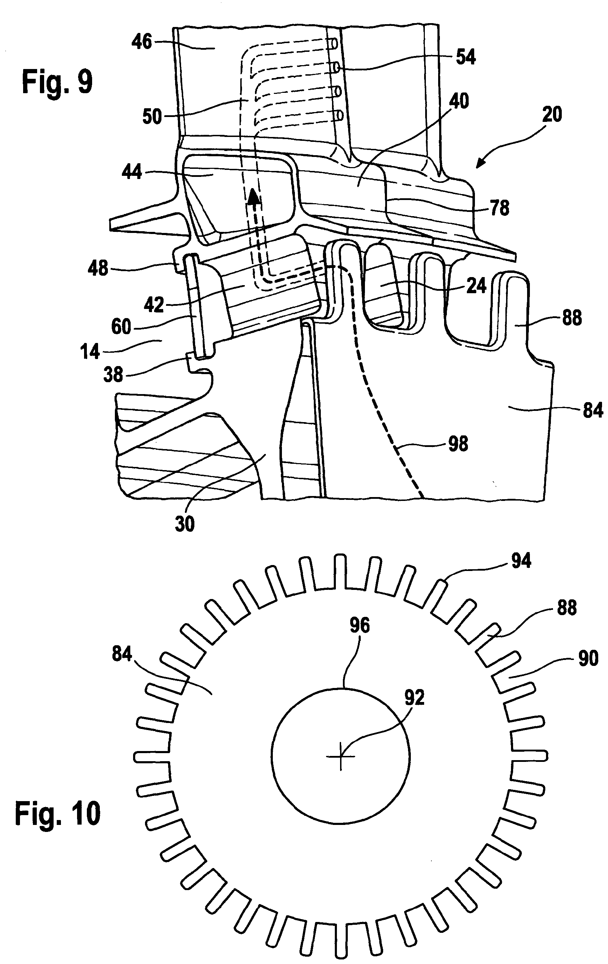

Figur 9 zeigt eine schematische Darstellung einer integral beschaufelten Rotorscheibe 20 mit einer Finger-Coverplate 84. Jedem Schaft 42 einer Laufschaufel 40 ist eine fingerähnliche radiale Erweiterung (88) der Finger-Coverplate 84 zugeordnet. Zwischen der Hochdruckseite 12 und den Schäften 42 einerseits und der Finger-Coverplate 84 andererseits kann Kühlluft in die Kühlkanäle 50 der Laufschaufeln 40 strömen.

Figur 10 zeigt eine schematische Darstellung der bereits in Figur 9 dargestellten Finger-Coverplate 84. Die Finger-Coverplate 84 weist an ihrem äußeren Umfang fingerähnliche radiale Erweiterungen 88 auf. Jede fingerähnliche radiale Erweiterung 88 erstreckt sich näherungsweise in radialer Richtung. Zwischen je zwei nächst benachbarten fingerähnlichen radialen Erweiterungen 88 ist jeweils ein Zwischenraum bzw. ein radialer Einschnitt 90. angeordnet. Dadurch ist der Abstand vom Mittelpunkt 92 der Finger-Coverplate 84 zu ihrem äußeren Rand 94 an den fingerförmigen radialen Erweiterungen 88 größer als an den radialen Einschnitten 90.

Die Finger-Coverplate 84 kann konzentrisch zu ihrem Mittelpunkt 92 einen inneren Rand 94 aufweisen. Wenn die Finger-Coverplate 84 zusammen mit einer Rotorscheibe 20 in eine Turbine eingebaut ist, kann der innerer Rand 96 eine Welle der Turbine umschließen.

Die Form der Finger-Coverplate 84 und insbesondere die ihrer Ränder 94, 96 sind so ausgebildet, dass zwischen der Finger-Coverplate 84 und der Rotorscheibe 20 ein Hohlraum liegt, der zumindest nach radial außen abgedichtet ist. Dazu liegt zumindest der äußere Rand 94 der Finger-Coverplate 84 beispielsweise an der Rotorscheibe 20 an. Dazu kann der äußere Rand 94 der Finger-Coverplate 84 abgewinkelt oder gebördelt sein, wie das in Figur 9 erkennbar ist.

Die Finger-Coverplate 84 kann an ihrem äußeren Rand 94 mit der Rotorscheibe 20 verschweißt, verlötet oder verklebt sein. In dem Hohlraum zwischen der Finger-Coverplate 84 und der Rotorscheibe 20 kann Kühlluft zu den Schäften 42 der Laufschaufeln 40 und in deren Kühlkanäle 50 hinein fließen. Dies ist mit dem Pfeil 98 angedeutet.

Bei dem in Figur 9 dargestellten Beispiel ist an jedem der kranzförmig an der Rotorscheibe 20 angeordneten Schäfte 42 eine fingerähnliche radiale Erweiterung 88 der Finger-Coverplate 84 angeordnet. Ferner ist bei diesem Beispiel an jeder Öffnung 24 ein radialer Einschnitt 90 der Finger-Coverplate 84 angeordnet. Davon abweichend können alternativ an jedem Schaft 42 auch mehrere fingerähnliche radiale Erweiterungen 88 angeordnet sein. In diesem Fall sind unter jeder fingerähnlichen Erweiterung 88 ein oder mehrere Eingänge 52 zu einem oder mehreren Kühlkanälen 50 angeordnet, so dass jedem Eingang 52 über eine der fingerähnlichen radialen Erweiterungen Kühlluft zugeführt werden kann.

Figur 11 zeigt eine schematische Darstellung einer integral beschaufelten Rotorscheibe 20, der von einer an ihrer Hochdruckseiten angeordneten Vordralldüse Kühlluft zugeführt werden kann.

Bei den oben anhand der Figuren dargestellten integral beschaufelten Rotorscheiben 20 ist die Dichteinrichtung 60 im Bereich der Verbindung zwischen dem Scheibenelement 30 und den Laufschaufeln 40 angeordnet. Anstelle der oben beispielsweise anhand der Figuren 1, 2, 6 und 9 dargestellten Befestigung mittels Stegen oder Haken 38, 48 sowohl an dem Scheibenelement 30 als auch an den Laufschaufeln 40 ist auch eine Befestigung nur am Scheibenelement 30 oder nur an Laufschaufeln 40 möglich. Anstelle der Befestigung mittels Stegen oder Haken 38, 48 oder zusätzlich dazu ist eine Befestigung mittels einer Klemmung, einer Verrastung, durch Niete, Stifte, Schrauben oder auf andere Weise möglich. Die Befestigung kann für eine einmalige oder mehrmalige Verbindung und Trennung ausgebildet sein.

Wie bereits erwähnt kann die Dichteinrichtung zur Abdichtung in axialer Richtung anstelle eines einzigen zusammenhängenden Bauteils mehrere nicht miteinander verbundene Bauteile aufweisen. Die oben anhand der Figur 7 dargestellten kreisbogenförmigen Segmente sind dafür nur ein aber nicht das einzige mögliche Beispiel. Ein weiteres Beispiel sind einzelne Elemente, die an oder in jeweils einem Zwischenraum bzw. einer Öffnung 24 angeordnet sind. Diese einzelnen Elemente können einzeln auf eine der beschriebenen Weisen an dem Scheibenelement 30 und/oder an den Schaufeln 40 befestigt sein. Die einzelnen Elemente können beispielsweise in den Zwischenräumen bzw. Öffnungen 24 durch Klemm-, Rast, Niet- Schraub- oder Schweißverbindungen befestigt sein. Gemäß einer weiteren Alternative sind jeweils mehrere oder alle einzelnen Elemente mittels eines gemeinsamen Befestigungselements befestigt, beispielsweise mittels eines gemeinsamen Bügels oder Rahmens.

## Patentansprüche

1. Integral beschaufelte Rotorscheibe (20) für eine Turbine, mit:
- Laufschaufeln (40), die mit einem Scheibenelement (30) stoffschlüssig verbunden sind; und
- einer Dichteinrichtung (60) zur Unterbindung oder Reduzierung eines Übertritts von Kühlluft von einer Hochdruckseite (12) der Rotorscheibe (20) durch Öffnungen (24) an der Rotorscheibe (20) hindurch zu einer Niederdruckseite (14) der Rotorscheibe (20),
wobei die Öffnungen (24) kranzförmig angeordnet sind und die Dichteinrichtung ein ein- oder mehrstückiges ringförmiges Bauteil (60) umfasst, das an der Hochdruckseite (12) oder an der Niederdruckseite (14) der Öffnungen (24) angeordnet ist,
**dadurch gekennzeichnet, dass**
das Scheibenelement (30) und die Laufschaufeln (40) jeweils Halteelemente (38, 48) aufweisen, durch die das ringförmige Bauteil (60) gehalten ist, wobei das ringförmige Bauteil (60) in die Halteelemente (38, 48) eingehakt ist.

2. Integral beschaufelte Rotorscheibe (20) nach einem der vorangehenden Ansprüche, ferner mit:
- Kühlkanälen (50) in den Laufschaufeln (40),
wobei Eingänge (52) zu den Kühlkanälen (50) an Seiten der Laufschaufel (40), die einer Hochdruckseite der Rotorscheibe (20) zugewandt sind, und/oder an Seiten der Laufschaufeln (40), die einer Niederdruckseite der Rotorscheibe (20) zugewandet sind, angeordnet sind.

3. Integral beschaufelte Rotorscheibe (20) nach Anspruch 1, bei der das ringförmige Bauteil (60) ein Blechteil oder mehrere mit einander verbundene Blechteile umfasst.

4. Integral beschaufelte Rotorscheibe (20) nach einem der Ansprüche 1 bis 3, ferner mit Halteeinrichtungen (64), die in die Öffnungen (24) eingreifen und das ringförmige Bauteil (60) halten.

5. Integral beschaufelte Rotorscheibe (20) nach dem vorangehenden Anspruch, bei der eine Halteeinrichtung ein Rohr (64) oder ein Blechprofilbauteil umfasst, das in die entsprechende Öffnung (24) eingesetzt ist und mit einem Kragen oder einem gebördelten Rand das ringförmige Bauteil (60) hält.

6. Integral beschaufelte Rotorscheibe (20) nach einem der Ansprüche 1 bis 5, bei der eine Laufschaufel (40) jeweils einen Schaft (42), ein Blatt (46) und eine zwischen Schaft (42) und Blatt (46) angeordnete Plattform (44) aufweist, und die Öffnungen (24) an der Rotorscheibe (20) Zwischenräume zwischen den Schäften der Laufschaufeln (40) sind.

7. Integral beschaufelte Rotorscheibe (20) nach einem der Ansprüche 1 bis 6, bei der die Dichteinrichtung (60) eine Öffnung (64) aufweist, durch die Kühlluft von der Hochdruckseite (12) zur Niederdruckseite (14) übertreten kann.

8. Integral beschaufelte Rotorscheibe (20) nach einem der vorangehenden Ansprüche, ferner mit einer Mehrzahl weiterer Dichteinrichtungen (70), die zwischen den Plattformen (44) angeordnet sind, zur Unterbindung oder Reduzierung eines Übertritts von Kühlluft zwischen den Plattformen (44) hindurch.

9. Turbine mit einer integral beschaufelten Rotorscheibe (20) nach einem der vorangehenden Ansprüche.

## Claims

1. Integrally bladed rotor disc (20) for a turbine, comprising:
- Rotor blades (40) which are integrally bonded with a disc element (30); and
- a sealing device (60) for preventing or reducing a transfer of cooling air from a high-pressure side (12) of the rotor disc (20) through openings (24) in the rotor disc (20) to a low-pressure side (14) of the rotor disc (20),
wherein the openings (24) are arranged annularly, and the sealing device comprises an annular component (60) which consists of one or more parts and is arranged on the high-pressure side (12) or on the low-pressure side (14) of the openings (24),
**characterized in that**
the disc element (30) and the rotor blades (40) each have retaining elements (38, 48), by means of which the annular component (60) is retained, wherein the annular component (60) is hooked into the retaining elements (38, 48).

2. Integrally bladed rotor disc (20) according to one of the previous claims, further comprising:
- Cooling channels (50) in the rotor blades (40),
wherein inlets (52) to the cooling channels (50) are arranged on the sides of the rotor blades (40) which are facing a high-pressure side of the rotor disc (20), and/or on the sides of the rotor blades (40) which are facing a low-pressure side of the rotor disc (20).

3. Integrally bladed rotor disc (20) according to claim 1, in which the annular component (60) comprises one sheet metal part or a plurality of sheet metal parts which are connected to one another.

4. Integrally bladed rotor disc (20) according to one of the claims 1 to 3, further comprising retaining means (64) which engage in the openings (24) and retain the annular component (60).

5. Integrally bladed rotor disc (20) according to the previous claim, in which the one retaining means comprises a pipe (64) or a metal sheet profile component which is inserted in the corresponding opening (24) and retains the annular component (60) by means of a collar or a crimped edge.

6. Integrally bladed rotor disc (20) according to one of the claims 1 to 5, in which a rotor blade (40) each has a shaft (42), a leaf (46), and a platform (44) arranged between the shaft (42) and the leaf (46), and the openings (24) in the rotor disc (20) are gaps between the shafts of the rotor blades (40).

7. Integrally bladed rotor disc (20) according to one of the claims 1 to 6, in which the sealing device (60) has an opening (64), through which the cooling air can transfer from the high-pressure side (12) to the low-pressure side (14).

8. Integrally bladed rotor disc (20) according to one of the previous claims, further comprising a multiplicity of further sealing devices (70) which are arranged between the platforms (44) for preventing or reducing a transfer of cooling air between the platforms (44).

9. Turbine with an integrally bladed rotor disc (20) according to one of the previous claims.

## Revendications

1. Disque de rotor à aubage solidaire (20) pour une turbine, comprenant :
- des pales (40), qui sont reliées matériellement à un élément de disque (30) ; et
- un dispositif d'étanchéité (60) pour supprimer ou réduire un débordement d'air de refroidissement d'un côté haute pression (12) du disque de rotor (20) à travers des ouvertures (24) sur le disque de rotor (20) à un côté basse pression (14) du disque de rotor (20),
dans lequel les ouvertures (24) sont agencées en couronne et le dispositif d'étanchéité comprend un composant annulaire (60) formé d'une ou plusieurs pièces, qui est agencé sur le côté haute pression (12) ou sur le côté basse pression (14) des ouvertures (24), **caractérisé en ce que** :
l'élément de disque (30) et les pales (40) présentent respectivement des éléments de retenue (38, 48) par lesquels le composant annulaire (60) est maintenu, dans lequel le composant annulaire (60) est enclenché dans les éléments de retenue (38, 48).

2. Disque de rotor à aubage solidaire (20) selon l'une quelconque des revendications précédentes, comprenant en outre :
- des canaux de refroidissement (50) dans les pales (40),
dans lequel des entrées (52) dans les canaux de refroidissement (50) sont agencées sur les côtés des pales (40), qui sont tournées vers un côté haute pression du disque de rotor (20) et/ou sur les côtés des pales (40) qui sont tournées vers un côté basse pression du disque de rotor (20).

3. Disque de rotor à aubage solidaire (20) selon la revendication 1, dans lequel le composant annulaire (60) comprend une pièce de tôle ou plusieurs pièces de tôle reliées l'une à l'autre.

4. Disque de rotor à aubage solidaire (20) selon l'une quelconque des revendications 1 à 3, comprenant en outre des dispositifs de retenue (64), qui s'enclenchent dans les ouvertures (24) et maintiennent le composant annulaire (60).

5. Disque de rotor à aubage solidaire (20) selon la revendication précédente, dans lequel un dispositif de retenue comprend un tube (64) ou un composant profilé en tôle, qui est inséré dans l'ouverture correspondante (24) et maintient le composant annulaire (60) avec une collerette ou un bord évasé.

6. Disque de rotor à aubage solidaire (20) selon l'une quelconque des revendications 1 à 5, dans lequel une pale (40) présente respectivement une queue (42), une aube (46) et une plateforme (44) agencée entre la queue (42) et l'aube (46) et les ouvertures (24) sur le disque de rotor (20) sont des espaces intermédiaires entre les queues des pales (40).

7. Disque de rotor à aubage solidaire (20) selon l'une quelconque des revendications 1 à 6, dans lequel le dispositif d'étanchéité (60) présente une ouverture (64) par laquelle de l'air de refroidissement peut passer du côté haute pression (12) au côté basse pression (14).

8. Disque de rotor à aubage solidaire (20) selon l'une quelconque des revendications précédentes, comprenant en outre une pluralité d'autres dispositifs d'étanchéité (70) qui sont agencés entre les plateformes (44) pour supprimer ou réduire un débordement d'air de refroidissement entre les plateformes (44).

9. Turbine présentant un disque de rotor à aubage solidaire (20) selon l'une quelconque des revendications précédentes.
